# EUROPÄISCHE PATENTSCHRIFT

(11) **EP 2 251 536 B1**
(45) Veröffentlichungstag und Bekanntmachung des Hinweises auf die Patenterteilung: **05.12.2012**
(21) Anmeldenummer: 10159197.2
(22) Anmeldetag: 07.04.2010
(51) Int. Cl.: F02D 9/04, F02D 9/10, F02D 11/10, F16K 27/02

(54) **Planetengetriebevorrichtung für eine Regelvorrichtung einer Verbrennungskraftmaschine**
Planetary drive device for a device that regulates a combustion engine
Dispositif de train épicycloïdal pour un dispositif de réglage d'un moteur à combustion interne

(30) Priorität: 07.05.2009 DE 102009020245
(43) Veröffentlichungstag der Anmeldung: 17.11.2010
(73) Patentinhaber: Pierburg GmbH, 41460 Neuss (DE)
(72) Erfinder: Lappan, Rolf, 50733 Köln (DE); Tönnesmann, Dr., Andres, 52066 Aachen (DE); Nowak, Martin, 51379 Leverkusen (DE)
(74) Vertreter: Patentanwälte ter Smitten Eberlein Rütten Partnerschaftsgesellschaft

(56) Entgegenhaltungen:
- EP-A2- 0 170 505
- JP-A- 59 165 836
- US-A- 6 080 075
- US-B1- 6 254 058

## Beschreibung

Die Erfindung betrifft eine Planetengetriebevorrichtung für eine Regelvorrichtung einer Verbrennungskraftmaschine mit einem mehrteiligen Getriebegehäuse, in welchem das Planetengetriebe angeordnet ist, einem Antriebsritzel, welches über einen Aktuator in Drehung versetzbar ist, zumindest einem Planetenrad, welches als Doppelzahnrad mit einem größeren Zahnrad, welches mit dem Antriebsritzel kämmt, und einem kleineren Zahnrad ausgeführt ist, einem Hohlrad, welches mit dem kleineren Zahnrad des Doppelzahnrades kämmt, einer Ausgangswelle, die mit dem Hohlrad zumindest drehfest verbunden ist und im Getriebegehäuse gelagert ist und einer Rückstellfeder.

Derartige Planetengetriebevorrichtungen werden beispielsweise zur Untersetzung der Drehbewegung eines als Aktuator dienenden Elektromotors auf eine Klappenwelle benutzt. Dabei kann die Klappenwelle entweder direkt mit der Ausgangswelle des Getriebes verbunden sein oder über ein folgendes Koppelgetriebe.

Bei der Verwendung einer derartigen Planetengetriebevorrichtung beispielsweise als Antrieb zu einer Abgasrückführklappe, ist es erforderlich, die Klappe bei Ausfall des Aktuators in eine Notlaufposition zurückstellen zu können, welche üblicherweise der Stellung der Welle entspricht, in der die Klappenkörper den Querschnitt des Kanals vollständig verschließen.

Hierzu werden Rückstellfedern verwendet, die üblicherweise als Schraubenfeder ausgebildet sind und in Kraftübertragungsrichtung hinter dem Planetengetriebe angeordnet werden, so dass die Rückstellfeder zwischen Ausgangswelle und einem feststehenden Gehäuseteil eingespannt ist.

Eine derartige Anordnung ist beispielsweise aus der DE 10 2006 054 041 B3 bekannt. Diese offenbart eine Regelvorrichtung für eine zweiflutige Abgasrückführanlage. Der Aktuator wird durch einen Gleichstrommotor gebildet, der ein Antriebsritzel antreibt, dessen Bewegung über ein Planetengetriebe auf ein Hohlrad sowie eine mit dem Hohlrad fest verbundene Ausgangswelle untersetzt übertragen wird. Die Bewegung der Ausgangswelle wird über ein Koppelgetriebe mit einer Koppelstange und zwei Koppelscheiben auf eine Klappenwelle übertragen. Um das Planetengetriebe herum ist eine Rückstellfeder angeordnet, welche vorgespannt in der fail-safe Stellung der Klappen eingebaut ist, wobei ein erstes Ende der Rückstellfeder hinter einen Vorsprung an der Koppelscheibe geklemmt ist und ein zweites Ende hinter einen Vorsprung am Getriebegehäuse geklemmt ist. Beim Drehen wird die Feder weiter tordiert, so dass bei Entfall der Stellkraft durch Ausfall des Aktuators oder Bruch des Planetengetriebes die Klappen, durch die im Federelement gespeicherte Energie, in die Notlaufposition zurück gedreht werden.

Nachteilig an Ausführung ist jedoch, dass die als Schraubenfeder ausgebildete Rückstellfeder ungeschützt vor den äußeren Einflüssen des Motorraums angeordnet ist. Dies kann zu Fehlfunktionen beziehungsweise Ausfall der Feder durch Korrosion oder ßelagbildung führen. Um dem zu begegnen, könnten hochwertigere und somit kostspielige andere Federwerkstoffe verwendet werden. Auch kann bei auftretenden Verschmutzungen die notwendige Stellkraft zur Verstellung der Ausgangswelle steigen, so dass ein größerer Aktuator verwendet werden müsste.

Des Weiteren ist aus der US 6,254,058 eine Planetengetriebevorrichtung bekannt, bei der eine Rückstellfeder um den Antriebsmotor herum angeordnet ist, wobei Antriebsmotor und Getriebe in einem gemeinsamen Gehäuse angeordnet sind. Dies erhöht den notwendigen radialen Bauraum. Die Rückstellfeder wirkt jedoch auf den Planetenträgen, so dass eine Rückstellung der Ausgangswelle beispielsweise bei Bruch eines im Kraftfluss nachfolgenden Zahnrades nicht sichergestellt wird.

Es stellt sich daher die Aufgabe, eine Planetengetriebevorrichtung zu schaffen, mit der Fehlfunktionen der Feder durch äußere Einflüsse weitestgehend vermieden werden können, ohne auf höherwertige Federwerkstoffe zurückgreifen zu müssen. Es soll somit die Rückstellung in eine Notlaufposition für die gesamte Lebensdauer der Planetengetriebevorrichtung sichergestellt werden, wobei gleichzeitig Kosten reduziert und möglichst Bauraum eingespart werden sollen.

Diese Aufgabe wird durch den kennzeichnenden Teil des Hauptanspruchs gelöst. Durch die Anordnung der Rückstellfeder im Getriebegehäuse ist diese unempfindlich gegen Verschmutzung, da sie gegen äußere Umwelteinflüsse abgekapselt angeordnet ist. Auch wird der benötigte Bauraum reduziert. Auf diese Weise wird die Lebensdauer der Feder erhöht und eine zuverlässige Rückstellung sichergestellt. Dadurch, dass die Rückstellfeder als Schraubenfeder mit zwei Endschenkeln ausgebildet ist, wird die Kraftkopplung der Feder zu den gewünschten Kraftangriffspunkten der Montage vereinfacht. Des Weiteren wird dadurch, dass am feststehenden Getriebegehäuse ein erster Mitnehmer und an der Ausgangswolle ein zweiter Mitnehmer ausgebildet sind, gegen die die Endschenkel der Rückstellfeder in entgegengesetzter Umfangsrichtung der Schraubenwindungen vorgespannt anliegen, der Zusammenbau der Planetengetriebevorrichtung mit der Rückstellfeder vereinfacht. Zusätzliche Bauteile sind nicht erforderlich.

In einer bevorzugten Ausführung besteht das Getriebegehäuse aus einem Deckelteil, einem sich axial erstreckenden, hohlzylinderförmigen, radial außenliegendem Getriebegehäuseteil, welches sich senkrecht vom Deckelteil aus erstreckt und einem sich axial erstreckenden hohlzylinderförmigen radial innenliegenden Getriebegehäuseteil, welches sich senkrecht vom Deckelteil aus erstreckt, einem Getriebegehäuseboden und einem Getriebegehäusezwischenstück. Dabei können der Getriebegehäuseboden und das Zwischenstück zur Lagerung der Drehachsen der Planetenräder dienen und das Zwischenstück zusätzlich als erste Lagerstelle der Ausgangswelle. Das erste hohlzylinderförmige Gehäuseteil sowie das Deckelteil dienen zur Kapselung des Getriebes nach außen und das zweite hohlzylinderförmige Gehäuseteil als zweite Lagerstelle der Ausgangswelle. Somit wird durch wenige, leicht zu montierende Gehäuseteile eine zuverlässige Kapselung des Getriebes sichergestellt.

Vorzugsweise ist die Schraubenfeder konzentrisch um das radial innenliegende Getriebegehäuseteil und radial innerhalb des radial außenliegenden Getriebegehäuseteils angeordnet, wodurch eine einfache Führung der Schraubenfeder durch das innenliegende Gehäuseteil erreicht wird und die Unterbringung im Gehäuse auf einfache Weise sichergestellt wird, ohne zusätzlichen Bauraum für die Feder zu benötigen.

In einer weiterführenden Ausführung sind das Deckelteil, das hohlzylinderförmige radial innenliegende Getriebegehäuseteil und das hohlzylinderförmige radial außenliegende Getriebegehäuseteil einstückig ausgebildet. Dies erleichtert wiederum die Montage durch Reduzierung der zu verwendenden Bauteile.

Vorteilhaft ist es, den ersten Mitnehmer am Deckelteil des Getriebegehäuses auszubilden, da dieser durch einen einfachen sich axial erstreckenden Vorsprung am Deckelteil verwirklicht werden kann, so dass keine zusätzlichen Bauteile verwendet werden müssen.

Vorzugsweise liegt ein erstes Kugellager mit seinem Außenring gegen das hohlzylinderförmige radial innenliegende Getriebegehäuseteil an und mit seinem Innenring gegen die Ausgangswelle an, so dass das hohlzylinderförmige radial innenliegende Gehäuseteil die Funktion als Lagerstelle der Ausgangswelle und als Führung der Rückstellfeder wahrnimmt.

Die erfindungsgemäße Planetengetriebevorrichtung eignet sich somit für die Verwendung im thermisch und durch Verschmutzungen hoch belasteten Motorraum, da alle Teile gegen Umwelteinflüsse abgekapselt sind. Dabei wird jedoch auch sichergestellt, dass die Notlaufposition durch die Rückstellfeder zuverlässig bei Ausfall des Aktuators oder Bruch des Getriebes angefahren wird. Der hierzu benötigte Bauraum wird minimiert und die Montage und Einstellung der Rückstellfeder vereinfacht. Dabei können kostengünstige Federwerkstoffe verwendet werden.

Ein Ausführungsbeispiel ist in den Figuren dargestellt und wird nachfolgend beschrieben.

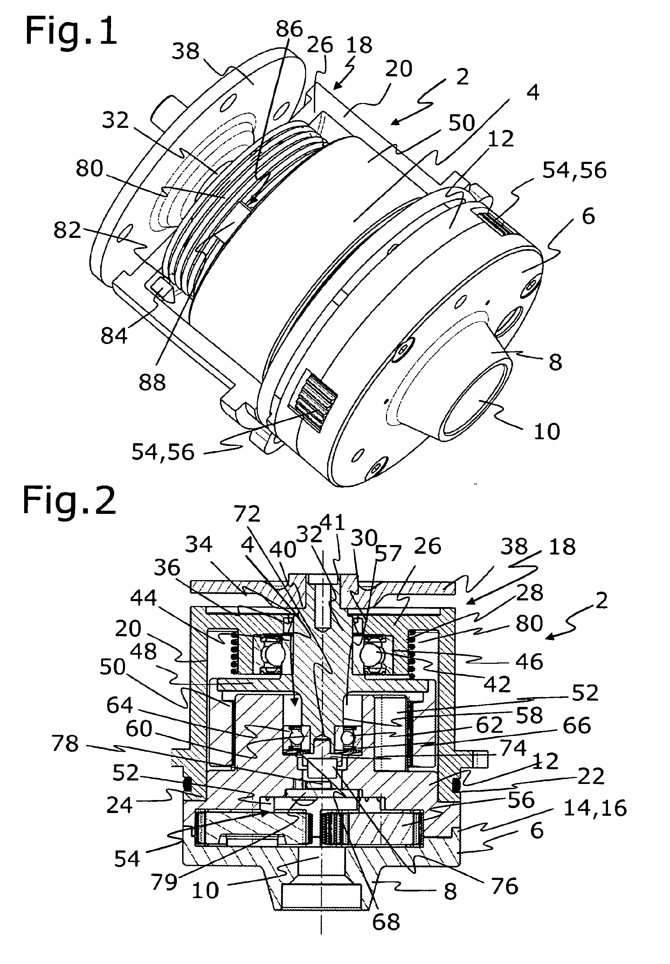

Figur 1 zeigt eine dreidimensionale Darstellung einer erfindungsgemäßen Planetengetriebevorrichtung mit teilweise aufgeschnittenem Gehäuse.
Figur 2 zeigt eine Seitenansicht der erfindungsgemäßen Planetengetriebevorrichtung in geschnittener Darstellung.

Die in den Figuren dargestellte erfindungsgemäße Planetengetriebevorrichtung besteht aus einem mehrteiligen Getriebegehäuse 2, in dem ein Planetengetriebe 4 angeordnet und gelagert ist.

Das Getriebegehäuse 2 weist einen Getriebegehäuseboden 6 mit einem kegeligen, sich in Richtung eines nicht dargestellten Aktuators erstreckenden Vorsprung 8 auf, an dem eine konzentrisch zum Vorsprung 8 angeordnete zentrale Bohrung 10 ausgebildet ist, durch die eine nicht dargestellte Antriebswelle mit einem zumindest drehfest darauf angeordneten, nicht dargestellten Antriebsritzel in das Getriebegehäuse 2 ragt. Der kegelige Vorsprung 8 mit seiner Bohrung 10 dient zur zentrischen Positionierung des Getriebegehäuses 2 auf dem Aktuator.

Am Getriebegehäuseboden 6 ist ein Getriebegehäusezwischenstück 12 befestigt, welches an seiner Zum Getriebegehäuseboden 6 gewandten Seite eine über den Umfang verlaufende Ausnehmung 14 aufweist, in die ein korrespondierender, am Getriebegehäuseboden 6 radial außen angeordneter umlaufender Vorsprung 16 greift, so dass auch die Lage des Zwischenstücks 12 zum Gehäuseboden 6 festgelegt ist.

Am Zwischenstück ist ein weiteres Gehäuseteil 18 befestigt, wobei dieses ein radial außenüegendes sich hohlzylinderförmig erstreckendes Getriebegehäuseteil 20 umfasst, dessen Ende in eine zweite, gegenüberliegend zur ersten Ausnehmung 14 angeordnete sich über den Umfang des Zwischenstücks 12 erstreckende Ausnehmung 22 passt und gegen das als Anschlagfläche dienende Ende 24 der Ausnehmung 22 des Zwischenstücks 12 anliegt. Hierdurch entsteht auch eine Zentrierung des Gehäuseteils 18 zum Zwischenstück 12 und somit zum Aktuator.

Das Gehäuseteil 18 weist zusätzlich ein Deckelteil 26 auf, von dem aus sich das radial außenliegende hohlzylinderförmige Teil 20 sowie ein radial innenliegendes Getriebegehäuseteil 28 in Richtung zum Aktuator erstrecken. Das Deckelteil 26 weist wiederum eihl-, Öffnung 30 auf, durch die eine Ausgangswelle 32 der Planetengetriebevorrichtung ragt und die konzentrisch zur Bohrung 10 des Gehäusebodens 6 angeordnet ist. In der Öffnung 30 ist ein axial gegen einen Absatz 34 anliegender Dichtring 36 zur Abdichtung der Wellendurchführung angeordnet. Außerhalb des Getriebegehäuses 2 ist auf der Ausgangswelle 32 eine Koppelplatte 38 befestigt, die einen Absatz 40 der Ausgangswelle 32 im Bereich einer zentralen Bohrung 41 an der Koppelplatte 38 anliegt. An diese Koppelplatte 38 kann in bekannter Weise ein weiterführendes Koppelgetriebe angeschlossen werden.

In Richtung zum Getriebegehäuseboden 6 erstreckt sich die Ausgangswelle 32 in das Innere des Getriebegehäuses 2, wobei unmittelbar hinter der Dichtung auf der Ausgangswelle 32 ein erstes Kugellager 42 angeordnet ist, dessen Innenring 44 auf der Welle sitzt und dessen Außenring 46 auf der radialen Innenwand des innenliegenden hohlzylinderförmigen Gehäuseteils 28 anliegt, so dass das innenliegende Gehäuseteil 28 eine erste Lagerstelle für die Ausgangswelle 32 bildet. Axial liegt das Kugellager 42 an seinem ersten axialen Ende mit seinem Außenring 46 gegen das Deckelteil 26 an und an seinem entgegengesetzten axialen Ende mit seinem Innenring 44 gegen eine kreisförmige Erweiterung 48 der Ausgangswelle 32 an. Am Außenumfang dieser kreisförmigen Erweiterung 48 ist ein Hohlrad 50 des Planetengetriebes 4 befestigt, welches sich wiederum in Richtung zum Getriebegehäuseboden 6 erstreckt.

Von der kreisförmigen Erweiterung 48 aus erstreckt sich die Ausgangswelle 32 weiter durch eine entsprechende Öffnung 57 im Getriebegehäusezwischenstück 12. Die Ausgangswelle 32 weist in diesem Bereich einen weiteren Absatz 58 auf, von dem aus sich die Ausgangswelle 32 mit einem verringerten Durchmesser bis zu ihrem Ende erstreckt. Auf diesem Abschnitt verringerten Durchmessers ist ein Innenring 60 eines zweiten Kugellagers 62 gegen den Absatz 58 anliegend angeordnet, dessen Außenring 64 in der Öffnung 56 des Getriebegehäusezwischenstücks 12 gelagert ist, so dass das Zwischenstück 12 eine zweite Lagerstelle der Ausgangswelle 32 bildet. Der Außenring 64 liegt unter Zwischenlage eines Distanzringes 66 gegen einen entsprechenden Absatz 68 der Öffnung 56 des Zwischenstücks 12 an.

Am Ende der Ausgangswelle 32 ist ein Sackloch 72 mit einem Innengewinde vorgesehen, in welchem eine Schraube 74 befestigt ist, auf deren Kopf ein Magnet 76 angeordnet ist. Dieser Magnet 76 korrespondiert in bekannter Weise mit einem berührungslosen Sensor 78, der auf einer Platine 79 angeordnet ist, die unterhalb der Öffnung 56 am Gehäusezwischenstück 12 befestigt ist.

Das Hohlrad 50 kämmt mit jeweils kleineren Zahnrädern 52 von drei Doppelzahnrädern, die als Planetenräder 54 des Planetengetriebes 4 dienen. Diese sind drehbar auf nicht dargestellten Achsen gelagert, die am Getriebegehäuseboden 6 befestigt sind. Das Gehäusezwischenstück 12 weist entsprechend ausgeformte Öffnungen zur beweglichen Aufnahme der Planetenräder 54 auf. Die Planetenräder 54 weisen neben dem jeweils kleineren Zahnrad 52 jeweils ein größeres Zahnrad 56 auf, welches drehfest mit dem jeweiligen kleineren Zahnrad 52 verbunden ist. Diese drei größeren Zahnräder 56 kämmen, wie mit dem nicht dargestellten Antriebsritzel, welches auf der Antriebswelle des als Aktuator dienenden Gleichstrommotors angeordnet ist und durch die Bohrung 10 im Getriebegehäuseboden 6 ragt.

Wird das Antriebsritzel über den Aktuator angetrieben, werden auch die ortsfest angeordneten Doppelzahnräder 54 in Drehung versetzt. Deren Drehung wird wiederum auf das Hohlrad 50 und über die Erweiterung 48 der Ausgangswelle 32 auf diese übertragen. Durch die verwendeten Doppelzahnräder und das Hohlrad 50 findet dabei eine Untersetzung statt. Mit der Ausgangswelle 32 wird auch der Magnet 76 gedreht, so dass über den feststehenden berührungslosen Sensor 78 eine Lagerückmeldung erfolgt.

Erfindungsgemäß ist nun für den Fall eines Ausfalls des Aktuators radial um das hohlzylinderförmige innenliegende Getriebegehäuseteil 28 eine Rückstellfeder 80 in Form einer Schraubenfeder angeordnet, welche einen ersten Endschenkel 82 aufweist, der von einem ersten Mitnehmer 84 in Form eines sich axial vom Deckelteil 26 in das Gehäuseinnere erstreckenden Vorsprungs aufgenommen ist und einen zweiten Endschenkel 86 aufweist, der von einem zweiten Mitnehmer 88 in Form eines sich axial von der kreisförmigen Erweiterung 48 der Ausgangswelle 32 in Richtung zum Deckelteil 26 erstreckenden Vorsprungs aufgenommen ist.

Diese Rückstellfeder 80 ist vorgespannt zwischen den beiden Mitnehmern 84, 88 eingebaut. Dies bedeutet, dass in jedem Zustand des Aktuators die beiden Endschenkel 82, 86 der Schraubenfeder 80 eine In entgegengesetzter Richtung wirkende Kraftkomponente in Umfangrichtung auf den jeweiligen Mitnehmer 84, 88 ausüben. Bei Drehung der Welle 32 aus ihrer Ausgangslage wird somit die Feder 80 über den sich mit drehenden Mitnehmer 88 weiter gespannt, so dass die wirkenden Kräfte und somit die in der Feder 80 gespeicherte Energie wächst, die beim Ausfall des Aktuators so freigesetzt wird, dass die Ausgangswelle 32 durch die gespeicherte Federenergie in ihre Ausgangslage zurückgedreht wird.

Dabei ist die Ruckstellfeder 80 jedoch so angeordnet, dass sie sich im Inneren des Getriebegehäuses 2 vollständig abgekapselt von der Umgebung befindet. Entsprechend ist sie keinen äußeren Umwelteinflüssen ausgesetzt und benötigt aufgrund dieser Anordnung keinen zusätzlichen Bauraum. So können kostengünstige Federwerhstoffe verwendet werden. Des Weiteren wird deutlich, dass die Montage der Getriebeeinheit auf einfache Weise mit der Rückstellfeder 80 als vormontiertes Bauteil stattfinden kann.

Es sollte deutlich sein, dass verschiedene Modifikationen insbesondere bezüglich der konstruktiven Ausgestaltung der verschiedenen Gehäuseteile und der Anordnung des Getriebes möglich sind, ohne den Schutzbereich des Hauptanspruchs zu verlassen.

Aufgrund dieser beschriebenen Vorteile eignet sich die Planetengetriebevorrichtung für den Einsätz als Antrieb von Abgasrückführklappen, also in thermisch und bezüglich von Verschmutzungen hochbelasteten Bereichen eines Verbrennungsmotors beispielsweise in Nutzfahrzeugen.

## Patentansprüche

1. Planetengetriebevorrichtung für eine Regelvorrichtung einer Verbrennungskraftmaschine mit
einem mehrteiligen Getriebegehäuse, in welchem das Planetengetriebe angeordnet ist,
einem Antriebsritzel, welches über einen Aktuator in Drehung versetzbar ist, zumindest einem Planetenrad, welches als Doppelzahnrad mit einem größeren Zahnrad, welches mit dem Antriebsritzel kämmt, und einem kleineren Zahnrad ausgeführt ist,
einem Hohlrad, welches mit dem kleineren Zahnrad des Doppelzahnrades kämmt,
einer Ausgangswelle, die mit dem Hohlrad zumindest drehfest verbunden ist und im Getriebegehäuse gelagert ist und
einer Rückstellfeder
**dadurch gekennzeichnete dass**
die Rückstellfeder (80) innerhalb des Getriebegehäuses (2) angeordnet ist und als Schraubenfeder mit zwei Endschenkeln (82, 86) ausgebildet ist, wobei am feststehenden Getriebegehäuse (2) ein erster Mitnehmer (84) und an der Ausgangswelle (32) ein zweiter Mitnehmer (88) ausgebildet sind, gegen die die Endschenkel (82, 86) der Rückstellfeder (80) in entgegengesetzter Umfangsrichtung vorgespannt anliegen.

2. Planetengetriebevorrichtung für eine Regelvorrichtung einer Verbrennungskraftmaschine Anspruch 1,
dadurch gekenneichnet, dass
das Getriebegehäuse (2) aus einem Deckelteil (26), einem sich axial erstreckenden hohlzylinderförmigen radial außenliegendem Getriebegehäuseteil (20), welches sich senkrecht vom Deckelteil (26) aus erstreckt und einem sich axial erstreckenden hohlzylinderförmigen radial innenliegenden Getriebegehäuseteil (28), welches sich senkrecht vom Deckelteil (26) aus erstreckt, einem Getriebegehäuseboden (6) und einem Getriebegehäusezwischenstück (12) besteht.

3. Planetengetriebevorrichtung für eine Regelvorrichtung einer Verbrennungskraftmaschine nach Anspruch 2,
**dadurch gekennzeichnet, dass**
die Schraubenfeder (80) konzentrisch um das hohlzylinderförmige radial innenliegende Getriebegehäuseteil (28) und radial innerhalb des hohlzylinderförmigen radial außenliegenden Getriebegehauseteils (20) angeordnet ist.

4. Planetengetriebvorrichtung für eine Regelvorrichtung einer Verbrennungskraftmaschine einem der Ansprüche 2 oder 3,
**dadurch gekennzeichnete dass**
das Deckelteil (26), das hohlzylinderförmige radial außenliegende Getriebegehäuseteil (20) und das hohlzylinderförmige radial innenliegende Getriebegehäuseteil (28) einstückig ausgebildet sind.

5. Planetengetriebvorrichtung für eine Regelvorrichtung einer Verbrennungskraftmaschine nach einem der Ansprüche 2 bis 4,
**dadurch gekennzeichnet, dass**
der erste Mitnehmer (84) am Deckelteil (26) des Getriebegehäuses (2) ausgebildet ist.

6. Planetengetriebevorrichtung für eine Regelvorrichtung einer Verbrennungskraftmaschine nach einem der Ansprüche 2 bis 5,
**dadurch gekennzeichnet, dass**
ein erstes Kugellager (42) mit seinem Außenring (46) gegen das zweite, hohlzylinderförmige radial innenliegende Getriebegehäuseteil (28) anliegt und mit seinem Innenring (44) gegen die Ausgangswelle (32) anliegt.

## Claims

1. Planetary gearing device for a control device of an internal combustion engine, comprising
a multi-part gearbox in which the planetary gearing is arranged,
a drive pinion adapted to be rotated via an actuator,
at least one planetary wheel configured as a double gear wheel with a larger gear wheel meshing with the drive pinion, and a smaller gear wheel,
a ring gear meshing with the smaller gear wheel of the double gear wheel, an output shaft which is connected with said ring gear at least in a manner to rotate therewith and is supported in the gearbox, and
a return spring,
**characterized in that**
the return sprung (80) is arranged within the gearbox (2) and is configured as a helical spring with two end branches (82, 86), wherein a first tappet (94) is formed on the stationary gearbox (2) and a second tappet (88) is formed on the output shaft (32), against which tappets the end branches (82, 86) of the return spring (80) abut biased in opposed circumferential directions.

2. Planetary gearing device for a control device of an internal combustion engine of claim 1, **characterized in that** the gearbox (2) is formed by a cover member (26), an axially extending, hollow cylindrical, radially outer gear box member (20) that extends perpendicularly from the cover member (26), and an axially extending, hollow cylindrical, radially inner gearbox member (28) that extends perpendicularly from the cover member (26), a gearbox bottom (6) and a gearbox intermediate member (12).

3. Planetary gearing device for a control device of an internal combustion engine of claim 2, **characterized in that** the helical spring (80) is arranged concentrically around the hollow cylindrical radially inner gearbox member (28) and radially within the hollow cylindrical radially outer gear box member (20).

4. Planetary gearing device for a control device of an internal combustion engine of claim 2 or 3, **characterized in that** the cover member (26), the hollow cylindrical radially outer gear box member (20) and the hollow cylindrical radially inner gearbox member (28) are formed integrally.

5. Planetary gearing device for a control device of an internal combustion engine of one of claims 2 to 4, **characterized in that** the first tappet (84) is formed on the cover member (26) of the gearbox (2).

6. Planetary gearing device for a control device of an internal combustion engine of one of claims 2 to 5, **characterized in that** a first ball bearing (42) abuts against the second, hollow cylindrical radially inner gearbox member (28) with its outer race (46) and abuts against the output shaft (32) with its inner race (44).

## Revendications

1. Dispositif de train épicycloïdal pour un dispositif de réglage d'un moteur à combustion interne, comprenant
une boite de vitesse à plusieurs parties, dans laquelle est disposé le train épicycloïdal,
un pignon d'entrainement rotatif par moyen d'un actionneur,
au moins une roue planétaire sous forme d'une roue dentée double avec une roue dentée plus large engrenant avec ledit pignon d'entrainement, et une roue dentée plus petite,
une couronne engrenant avec ladite roue dentée plus petite de la roue dentée double,
un arbre de sortie connecté avec ladite couronne au moins d'une manière à tourner avec celle-ci et supporté dans ladite boite de vitesse, et
un ressort de rappel,
**caractérisé en ce que**
ledit ressort de rappel (80) est disposé au sein de la boite de vitesse (2) et est sous forme d'un ressort hélicoïdal avec deux branches d'extrémité (82, 86), un premier taquet (84) étant formé sur la boite de vitesse (2) stationnaire, et un deuxième taquet (88) étant formé sur l'arbre de sortie (32), lesdites branches d'extrémité (82, 86) dudit ressort de rappel (80) s'appuyant sur lesdits taquets sous précontrainte dans des directions circonférentielles opposées.

2. Dispositif de train épicycloïdal pour un dispositif de réglage d'un moteur à combustion interne selon la revendication 1, **caractérisé en ce que** la boite de vitesse (2) est formée par un élément de couvercle (26), un élément de boite de vitesse (20) s'étendant axialement, en forme de cylindre creux, radialement externe, ledit élément s'étendant perpendiculairement à partir dudit élément de couvercle (26), et un élément de boite de vitesse (28) s'étendant axialement, en forme de cylindre creux, radialement interne, ledit élément s'étendant perpendiculairement à partir dudit élément de couvercle (26), un fond de boitier de vitesse (6) et un élément intermédiaire (12) de la boite de vitesse.

3. Dispositif de train épicycloïdal pour un dispositif de réglage d'un moteur à combustion interne selon la revendication 2, **caractérisé en ce que** le ressort hélicoïdal (80) est disposé concentriquement autour dudit élément de boite de vitesse (28) en forme de cylindre creux, radialement interne, et radialement au sein dudit élément de boite de vitesse (20) en forme de cylindre creux, radialement externe.

4. Dispositif de train épicycloïdal pour un dispositif de réglage d'un moteur à combustion interne selon les revendications 2 ou 3, **caractérisé en ce que** ledit élément de couvercle (26), ledit dudit élément de boite de vitesse (20) en forme de cylindre creux, radialement externe, et ledit élément de boite de vitesse (28) en forme de cylindre creux, radialement interne, sont formés en une seule pièce.

5. Dispositif de train épicycloïdal pour un dispositif de réglage d'un moteur à combustion interne selon l'une quelconque des revendications 2 à 4 **caractérisé en ce que** ledit premier taquet (84) est formé sur ledit élément de couvercle (26) de la boite de vitesse (2).

6. Dispositif de train épicycloïdal pour un dispositif de réglage d'un moteur à combustion interne selon l'une quelconque des revendications 2 à 5 **caractérisé en ce que** la bague extérieure (46) d'un premier roulement à billes (42) s'appuie contre le deuxième élément de boite de vitesse (28) en forme de cylindre creux, radialement interne, et son bague intérieure (44) s'appuie contre l'arbre de sortie (32).
